Europäisches Patentamt

European Patent Office

Office européen des brevets

(11) Veröffentlichungsnummer: **0 520 245 A2**

# EUROPÄISCHE PATENTANMELDUNG

(21) Anmeldenummer: **92109765.5**

(51) Int. Cl.5: **H01R 35/02**

(22) Anmeldetag: **10.06.92**

(30) Priorität: **22.06.91 DE 9107726 U**

(43) Veröffentlichungstag der Anmeldung:
**30.12.92 Patentblatt 92/53**

(84) Benannte Vertragsstaaten:
**CH DE FR GB IT LI SE**

(71) Anmelder: **kabelmetal electro GmbH**
**Kabelkamp 20 Postfach 260**
**W-3000 Hannover 1(DE)**

(72) Erfinder: **Schauer, Friedrich, Dipl.-Ing.**
**Forstweg 10**
**W-8501 Heroldsberg(DE)**
Erfinder: **Wolff, Manfred**
**Penzenhofener Strasse 4**
**W-8501 Schwarzenbruck(DE)**
Erfinder: **Neuner, Andreas**
**Stephanstrasse 39**
**W-8500 Nürnberg(DE)**

(54) **Vorrichtung zur Stromübertragung zwischen zwei relativ zueinander beweglichen Endstellen.**

(57) Es wird eine Vorrichtung zur Stromübertragung zwischen zwei Endstellen angegeben, zwischen denen eine in einem Gehäuse untergebrachte, der elektrischen Verbindung dienende und in Windungen verlaufende Flachleiter-Bandleitung mit mindestens zwei elektrischen Leitern (11) angeordnet ist. Mindestens eine der beiden Endstellen ist relativ zu der anderen bewegbar. Die Flachleiter-Bandleitung ist an ihren an den Endstellen liegenden Enden um 90° abgebogen. Zum Knickschutz und zur Verbesserung der Biegbarkeit sind die abgeknickten Enden der Flachleiter-Bandleitung jeweils in einen Schutzkörper (17) aus Isoliermaterial eingebettet, der über seine ganze Länge verteilt Durchbrechungen (19) aufweist, die an den beiden die seitlichen Kanten der Flachleiter-Bandleitung abdeckenden Rändern durch Stege (20) voneinander getrennt angeordnet und zur Seite hin offen sind. Zum Schutz der Windungen der Flachleiter-Bandleitung ist außerdem an dem Schutzkörper (17) im Bereich der Knickstelle eine biegbare Lasche (18) angebracht, die sich in Richtung der Windungen der Flachleiter-Bandleitung erstreckt.

Fig. 4

Die Erfindung bezieht sich auf eine Vorrichtung zur Stromübertragung zwischen zwei Endstellen, zwischen denen eine in einem Gehäuse untergebrachte, der elektrischen Verbindung dienende und in Windungen verlaufende Flachleiter-Bandleitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist, bei welcher die Flachleiter-Bandleitung an ihren an den Endstellen liegenden Enden um 90° abgebogen ist und bei welcher zumindest die abgeknickten Enden der Flachleiter-Bandleitung jeweils in einen Schutzkörper aus Isoliermaterial eingebettet sind (DE-GM 85 05 830).

Derartige Vorrichtungen werden beispielsweise bei der Stromzuführung für einen Prallschutz in einem Kraftfahrzeug verwendet. Ein wesentliches Problem bei diesen Geräten ist die Stromübertragung zwischen feststehenden und beweglichen Teilen derselben. Dieses Problem tritt bei allen Geräten auf, bei denen zwei relativ zueinander bewegbare Endstellen vorhanden sind, von denen in dem meisten Fällen eine als Festpunkt ausgebildet ist. Die für solche Fälle seit langem bekannten Schleifkontakte bzw. Schleifringe sind einem Verschleiß unterworfen und insbesondere bei niedrigen Stromstärken wegen der schwankenden Übergangswiderstände nachteilig.

Bei der eingangs erwähnten, bekannten Vorrichtung nach dem DE-GM 85 05 830 erfolgt die Stromübertragung durch die nach Art eines Federhauses gewickelte Flachleiter-Bandleitung - im folgenden kurz "FL-BL" genannt. Bei einer relativen Drehbewegung der beiden durch die FL-BL verbundenen Endstellen "atmet" die aufgewickelte Leitung wie die Feder einer Uhr. Die Windungen der FL-BL werden in der einen Drehrichtung auf einen kleineren Durchmesser zusammengezogen. Sie gehen in der anderen Drehrichtung wieder auf einen größeren Durchmesser auf. Die abgeknickten Enden der FL-BL dienen zum Anschluß derselben an eine Stromquelle einerseits und an Steuerelemente andererseits. Durch die Schutzkörper sind die mechanisch empfindlichen Leiter der FL-BL und die Knickstelle mechanisch geschützt. Die abgeknickten Enden der FL-BL sind durch die Schutzkörper relativ steif und daher nur schwierig zu handhaben. Außerdem kann die äußere Windung der FL-BL an der Kante des Schutzkörpers leicht beschädigt werden.

Der Erfindung liegt die Aufgabe zugrunde, die eingangs geschilderte Vorrichtung so weiterzubilden, daß der abgeknickte Teil der FL-BL einfacher zu handhaben ist und daß auch die Windungen derselben wirksam geschützt sind.

Diese Aufgabe wird gemäß der Erfindung dadurch gelöst,

- daß der Schutzkörper über seine ganze Länge verteilt Durchbrechungen aufweist, die an den beiden die seitlichen Kanten der FL-BL abdeckenden Rändern durch Stege voneinander getrennt angeordnet und zur Seite hin offen sind und
- daß an dem Schutzkörper im Bereich der Knickstelle eine biegbare Lasche angebracht ist, die sich in Richtung der Windungen der FL-BL erstreckt und an deren äußerer Windung anliegt.

Bei dieser Vorrichtung bleibt der Schutzkörper als mechanischer Schutz des abgeknickten Teils der FL-BL erhalten. Durch die an den Rändern angebrachten Durchbrechungen wird der Schutzkörper aber gut biegbar, und zwar auch in der Ebene, in welcher die Leiter der FL-BL nebeneinander liegen. Der abgeknickte Teil der FL-BL ist daher wesentlich einfacher zu handhaben. Durch die am Schutzkörper angebrachte biegbare Lasche ergibt sich außerdem ein Schutz des gewickelten Teils der FL-BL. Da die Lasche an der äußeren Windung der FL-BL anliegt, wird diese Windung quasi zwangsgeführt. Sie kann daher beim Aufgehen des gewickelten Teils der FL-BL auf einen größeren Durchmesser nicht an der Endstelle bzw. dem Schutzkörper vorbeigeschoben werden. Eine Beschädigung der äußeren Windung der FL-BL im Bereich der Endstelle ist damit ausgeschlossen.

Der den abgeknickten Teil der FL-BL umgebende Schutzkörper ist dann besonders gut zu handhaben, wenn die an einem Rand desselben liegenden Durchbrechungen jeweils in Höhe der Stege zwischen den Durchbrechungen des anderen Randes liegen.

Ein Ausführungsbeispiel des Erfindungsgegenstandes ist in den Zeichnungen dargestellt.

Es zeigen:

Fig. 1 und 2 schematisch Querschnitte durch zwei mit unterschiedlichen Vorrichtungen nach der Erfindung bestückte Geräte.

Fig. 3 ein Ende der in der Vorrichtung einsetzbaren FL-BL in vergrößerter Darstellung.

Fig. 4 das durch einen Schutzkörper ergänzte Ende der FL-BL nach Fig. 3.

Fig. 5 eine Draufsicht auf die Anordnung nach Fig. 4.

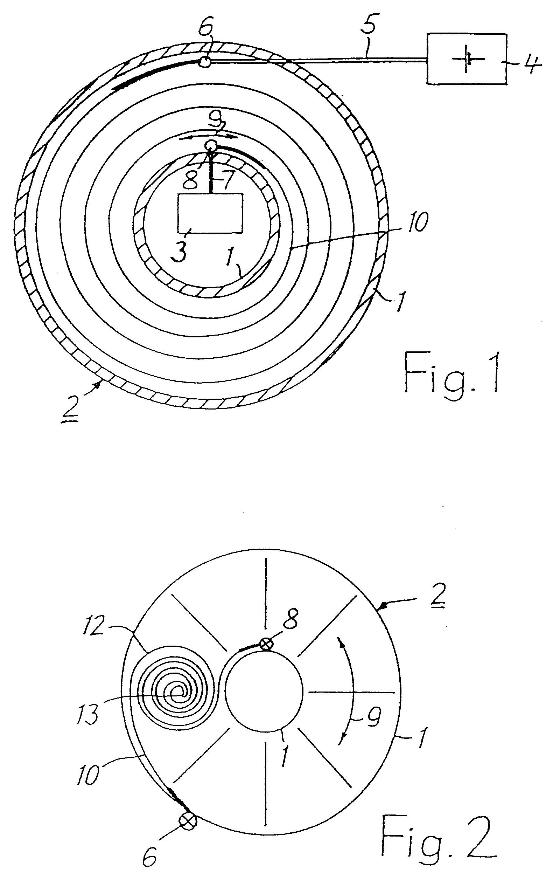

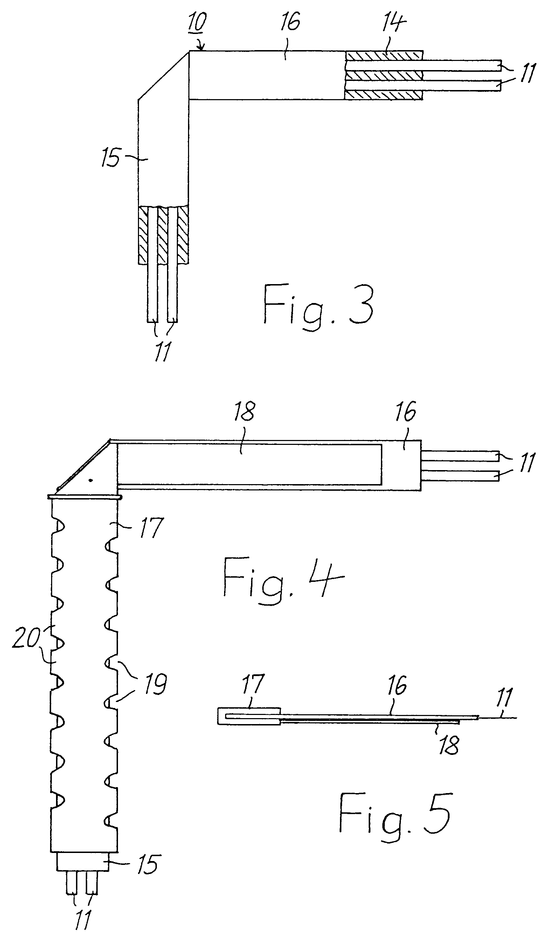

In Fig. 1 sind schematisch zwei beispielsweise kreisförmig ausgebildete Wandungen 1 des Gehäuses 2 eines elektrischen Geräts dargestellt. Dieses Gerät kann beispielsweise ein in das Lenkrad eines Kraftfahrzeugs eingebautes Steuergerät sein. Zur Stromversorgung einer Elektronik 3 des Geräts ist dasselbe an die Batterie 4 des Kraftfahrzeugs angeschlossen. Die Batterie 4 ist über eine elektrische Leitung 5 mit einer als Festpunkt ausgeführten Endstelle 6 verbunden. Die Elektronik 3 ist über eine elektrische Leitung 7 an eine Endstelle 8 angeschlossen, die in Richtung des Doppelpfeiles 9 bewegbar ist. Zwischen den beiden Endstellen 6 und 8 ist eine FL-BL 10 angebracht. Sie ist in dem in den Fig. 3 und 4 dargestellten Ausführungsbeispiel mit zwei Leitern 11 versehen. Die FL-BL 19 kann aber auch mehr als zwei Leiter haben. Die Leitungen 5 und 7 sind an die FL-BL 10 angeschlossen.

Die FL-BL 10 kann gemäß Fig. 1 zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen wesentlich mehr als sechs Windungen für die FL-BL 10 vorgesehen sein. Die Drehbewegung der Endstelle 8 macht sich dann für eine einzelne Windung der FL-BL 10 nicht wesentlich bemerkbar. Es wird lediglich der Durchmesser des aus allen Windungen der FL-BL 10 bestehenden Wickels verkleinert bzw. vergrößert.

Die FL-BL 10 kann zwischen den beiden Endstellen 6 und 8 gemäß Fig. 2 auch als Bifilarspule 12 gewickelt sein. In der Bifilarspule 12 ist die FL-BL 10 etwa in ihrer Mitte umgebogen, so daß sich eine Umkehrstelle 13 ergibt. Von dort aus ist die FL-BL 10 zweilagig gewickelt. Wenn an ihren beiden Enden in entgegengesetzter Richtung gezogen wird, verkleinert die durch das Wickeln entstandene Bifilarspule 12 ihren Durchmesser. Infolge der Elastizität der FL-BL 10 wickelt sie sich wieder auf, wenn die an ihren Enden angreifenden Zugkräfte fortfallen. Der Durchmesser der Bifilarspule 12 in der Ausgangsstellung der Vorrichtung wird zweckmäßig so gewählt, daß er gleich dem kürzesten Abstand der beiden Endstellen 6 und 8 voneinander oder kleiner als dieser Abstand ist.

Die FL-BL 10 hat in der Darstellung nach den Fig. 3 und 4 zwei flache Leiter 11, die zwischen Folien aus Isolierstoff als Isolierung 14 einkaschiert sind. An ihren Enden, von denen in den Fig. 3 und 4 nur eins dargestellt ist, ist die FL-BL 10 um 90° abgeknickt. Ihr in der Darstellung gemäß Fig. 3 nach unten weisender Teil 15 kann zum Anschluß an eine Stromquelle verwendet werden. Der Teil 16 der FL-BL 10 gehört zu der gewickelten Leitung, von der das Ende der äußeren Windung der aus den Fig. 1 und 2 ersichtlichen Anordnung, jeweils an den Endstellen 6 und 8, gezeigt ist.

Der Teil 15 der FL-BL 10 ist in einen aus Isoliermaterial bestehenden Schutzkörper 17 eingebettet, der beispielsweise um die FL-BL 10 herumgespritzt ist. Der Schutzkörper 17 könnte aber auch ein vorgefertigtes Teil aus Isoliermaterial sein, das auf die FL-BL 10 aufgesteckt wird. Er kann sich bis über die Knickstelle am Ende der FL-BL 10, an dem dieselbe um 90° gebogen ist, erstrekken. In Höhe der Knickstelle ist am Schutzkörper 17 eine Lasche 18 angeformt, die gut biegbar ist und sich in Richtung des Teils 16 der FL-BL 10 erstreckt. Die Lasche 18 liegt gemäß Fig. 5 an der äußeren Windung der FL-BL 10 an.

Der Schutzkörper 17 weist an seinen beiden einander gegenüber liegenden Rändern Durchbrechungen 19 auf, die zur Seite hin offen und jeweils durch Stege 20 voneinander getrennt sind. Durch die Durchbrechungen 19 wird die Biegbarkeit des Schutzkörpers 17 wesentlich verbessert. Das gilt auch quer zur Längsrichtung der FL-BL 10. In bevorzugter Ausführungsform sind die Durchbrechungen 19 am einen Rand des Schutzkörpers 17 gegenüber denen des anderen Randes jeweils in der Höhe versetzt. Die Durchbrechungen 19 des einen Randes liegen dann entsprechend der Darstellung in Fig. 4 in Höhe der Stege 20 des anderen Randes.

## Patentansprüche

1. Vorrichtung zur Stromübertragung zwischen zwei Endstellen, zwischen denen eine in einem Gehäuse untergebrachte, der elektrischen Verbindung dienende und in Windungen verlaufende Flachleiter-Bandleitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist, bei welcher die Flachleiter-Bandleitung an ihren an den Endstellen liegenden Enden um 90° abgebogen ist und bei welcher zumindest die abgeknickten Enden der Flachleiter-Bandleitung jeweils in einen Schutzkörper aus Isoliermaterial eingebettet sind, dadurch gekennzeichnet,
   - daß der Schutzkörper (17) über seine ganze Länge verteilt Durchbrechungen (19) aufweist, die an den beiden die seitlichen Kanten der Flachleiter-Bandleitung (10) abdeckenden Rändern durch Stege (20) voneinander getrennt angeordnet und zur Seite hin offen sind und
   - daß an dem Schutzkörper (17) im Bereich der Knickstelle eine biegbare Lasche (18) angebracht ist, die sich in Richtung der Windungen der Flachleiter-Bandleitung (10) erstreckt und an deren äußerer Windung anliegt.

2. Vorrichtung nach Anspruch 1, dadurch gekennzeichnet, daß die Durchbrechungen (19) an den Rändern des Schutzkörpers (17) derart gegeneinander versetzt angebracht sind, daß die Durchbrechungen (19) des einen Randes jeweils in Höhe der Stege (20) des anderen Randes liegen.

Fig. 1

Fig. 2

Fig. 3

Fig. 4

Fig. 5